# DEMANDE DE BREVET EUROPEEN

(11) **EP 0 809 382 A1**
(43) Date de publication de la demande: **26.11.1997**
(21) Numéro de dépôt: 97401121.5
(22) Date de dépôt: 21.05.1997
(51) Int. Cl.: H04L 12/56

(54) **Procédé d'interconnexion des noeuds d'un calculateur parallèle temps réel**

(30) Priorité: 21.05.1996 FR 9606278
(71) Demandeur: CS Technologies Informatiques, 75116 Paris (FR)
(72) Inventeur: Ducatez, Jean-Baptiste, 69400 Genas (FR); Guzzi, Mark, 69005 Lyon (FR); Fermor, David, 69130 Ecully (FR); Humeau, Gérard, 69150 Decines (FR); Genusov, Alex, 69004 Lyon (FR)
(74) Mandataire: Chameroy, Claude

(57) **Abrégé**

Procédé d'interconnexion des noeuds d'un calculateur parallèle temps réel dans lequel on utilise, comme système d'interconnexion, un réseau local de commutation à canaux virtuels, chaque canal virtuel étant associé à une bande passante déterminée, de façon à assurer le contrôle de bout en bout de la latence de transmission d'un message à transmettre en temps réel, dans une chaîne comprenant, un noeud émetteur (A) avec un processeur principal (3_{A}) et un adaptateur d'interface d'interconnexion (4_{A}), un noeud récepteur (B) avec un processeur principal (3_{B}) et un adaptateur d'interface d'interconnexion (4_{B}), et au moins un commutateur (1) reliant lesdits adaptateurs d'interface (3_{B}, 4_{B}).

## Description

La présente invention concerne un procédé d'interconnexion des noeuds d'un calculateur parallèle temps réel dans lequel on utilise, comme système d'interconnexion, un réseau local de commutation à canaux virtuels, chaque canal virtuel étant associé à une bande passante déterminée, de façon à assurer le contrôle de bout en bout de la latence de transmission d'un message à transmettre en temps réel, dans une chaîne comprenant, un noeud émetteur avec un processeur principal et un adaptateur d'interface d'interconnexion, un noeud récepteur avec un processeur principal et un adaptateur d'interface d'interconnexion, et au moins un commutateur reliant lesdits adaptateurs d'interface. Elle a trait également à un adaptateur d'interface d'interconnexion pour la mise en oeuvre de ce procédé.

La présente invention se rapporte au domaine des systèmes de calcul parallèles (multi-noeuds), et plus particulièrement à ceux utilisés dans des environnements temps réel distribués. Le procédé conforme à l'invention s'applique chaque fois qu'un système de calcul parallèle requière une bande passante élevée pour les transferts de données entre noeuds, en même temps qu'une latence déterministe et faible pour les communications en temps réel.

On sait que dans un système comportant une multiplicité de noeuds de calcul reliés par un système d'interconnexion, il est nécessaire d'échanger des informations, de type commande ou données, par l'intermédiaire de messages véhiculés par le système d'interconnexion.

Une première méthode consiste à relier les noeuds de calcul par un réseau de communication spécifique, local, permettant d'obtenir une topologie du réseau régulière, fixe, de type torique, matricielle, etc... Ces systèmes d'interconnexion sont utilisés dans les machines de type MPP (Processeurs Massivement Parallèles).

Cette méthode permet généralement de relier un assez grand nombre de noeuds de calcul avec de bonnes performances en terme de bande passante. L'inconvénient majeur de ce type de méthode est que la latence de transmission des messages, de bout en bout, est très mal contrôlée car les informations de type données sont transférées par blocs de taille importante pour utiliser la bande passante du réseau et les messages de contrôle ne sont pas différenciés.

De plus, ces systèmes d'interconnexion ne permettent pas une réelle distribution géographique des noeuds de calcul. Ainsi, l'acquisition des données distantes ne peut se faire que par des interfaces d'entrées/sorties, interdisant le traitement local des données, ou par un réseau local connecté à l'un des noeuds du calculateur, ce qui augmente encore la latence des transferts pour ces acquisitions.

Une deuxième approche, aujourd'hui utilisée, est la mise en réseau de calculateurs, cette méthode étant connue sous le nom de "cluster" (grappe). Dans cette méthode, les priorités des données transférées ne sont ni transmises, ni traitées par le réseau, ce qui interdit de maîtriser le comportement global du système. De plus, le fonctionnement du matériel nécessite une assistance du logiciel pour piloter le réseau d'interconnexion et assurer un transport fiable de l'information, ce qui multiplie la latence des transmissions par une facteur important et ne permet pas la maîtrise de la latence nécessaire à un fonctionnement temps-réel.

La présente invention a donc pour but principal de remédier à ces inconvénients et pour ce faire, elle a pour objet un procédé permettant d'obtenir une latence déterministe et faible entre les différents noeuds d'un calculateur parallèle temps réel utilisant le commutateur et l'interface physique d'un réseau local à commutation, comme système d'interconnexion.

Ce procédé est essentiellement caractérisé en ce qu'il comprend les étapes consistant :
- à affecter, lors de l'initialisation d'une application en temps réel sur le processeur principal du noeud émetteur, des canaux virtuels à bande passante disponible aux données intensives à transmettre et des canaux virtuels à bande passante réservée aux données à transmettre en temps réel ;
- à affecter un niveau de priorité à chaque message à transmettre en temps réel ;
- à segmenter les données intensives et les données temps réel en blocs de données, en ajoutant à chaque bloc de données temps réel l'information de priorité du message correspondant ;
- à transmettre sur l'adaptateur de l'interface d'interconnexion du noeud émetteur les blocs de données correspondant aux données intensives à une vitesse correspondant à la bande passante disponible du canal virtuel considéré et les blocs de données correspondant aux données à transmettre en temps réel à une vitesse correspondant à la bande passante réservée du canal virtuel considéré, tout en respectant le niveau de priorité affecté à chaque bloc de données ;
- à réassembler les blocs de données dans l'adaptateur de l'interface d'interconnexion du noeud récepteur afin de reconstituer les messages ; et
- à transmettre ces derniers au processeur principal du noeud récepteur en respectant le niveau de priorité desdits messages.

Ainsi, les aspects temps réel sont pris en compte de bout en bout. Entre autres, le déterminisme de la latence est obtenu grâce à une différenciation des messages de données et ceux réalisant le contrôle de l'exécution du logiciel depuis le noeud émetteur du message, son interface avec le réseau de communication, le réseau lui-même, l'interface avec le réseau du noeud récepteur et le noeud récepteur. Ce procédé reste valable lorsque les données transférées sont de la voix, des images ou de la vidéo.

Enfin l'approche proposée permet une interconnexion identique pour les communications internes et externes avec une adaptation des débits en fonction des besoins. L'intégration dans un réseau de communication est donc aisée tout en fournissant un comportement temps réel aussi bien interne qu'externe.

On notera par ailleurs que le procédé conforme à l'invention permet de mettre certains noeuds du calculateur parallèle à des emplacements distants, en particulier les noeuds d'acquisition de données, selon les possibilités du réseau local de communication.

Selon l'invention, un adaptateur d'interface d'interconnexion pour la mise en oeuvre de ce procédé est essentiellement caractérisé en ce qu'il comprend :
du côté émission
- des moyens pour ranger les messages temps réel, créés par le processeur principal du noeud émetteur et préalablement affectés d'un niveau de priorité, dans des queues de transmission de message en tenant compte de chaque canal virtuel utilisé et du niveau de priorité à l'intérieur de ce canal,
- des moyens d'arbitrage pour sélectionner le message suivant à transmettre et le canal virtuel correspondant, en fonction du niveau de priorité de chaque message,
- des moyens pour segmenter le message à transmettre en blocs de données comportant l'information de priorité du message correspondant,
- des moyens de formatage des blocs de données, et
- des moyens de transmission desdits blocs de données sur le réseau local de commutation comportant au moins un commutateur,
et du côté réception
- des moyens de réception des blocs de données ayant transité par ledit commutateur de réseau local,
- des moyens pour réassembler le message à partir des blocs de données reçus, et
- des moyens pour ranger les messages reconstitués dans des queues de réception en tenant compte de chaque canal virtuel utilisé et du niveau de priorité du message à l'intérieur de ce canal avant de les transmettre au processeur principal du noeud récepteur.

Une forme d'exécution de l'invention est décrite ci-après à titre d'exemple, en référence aux dessins annexés dans lesquels :
- la figure 1 représente très schématiquement l'interconnexion des noeuds d'un calculateur parallèle au moyen d'un réseau local à commutation ; et
- la figure 2 illustre de manière schématique les différentes étapes de transmission d'un message entre deux noeuds de la figure 1, conformément au procédé de l'invention.

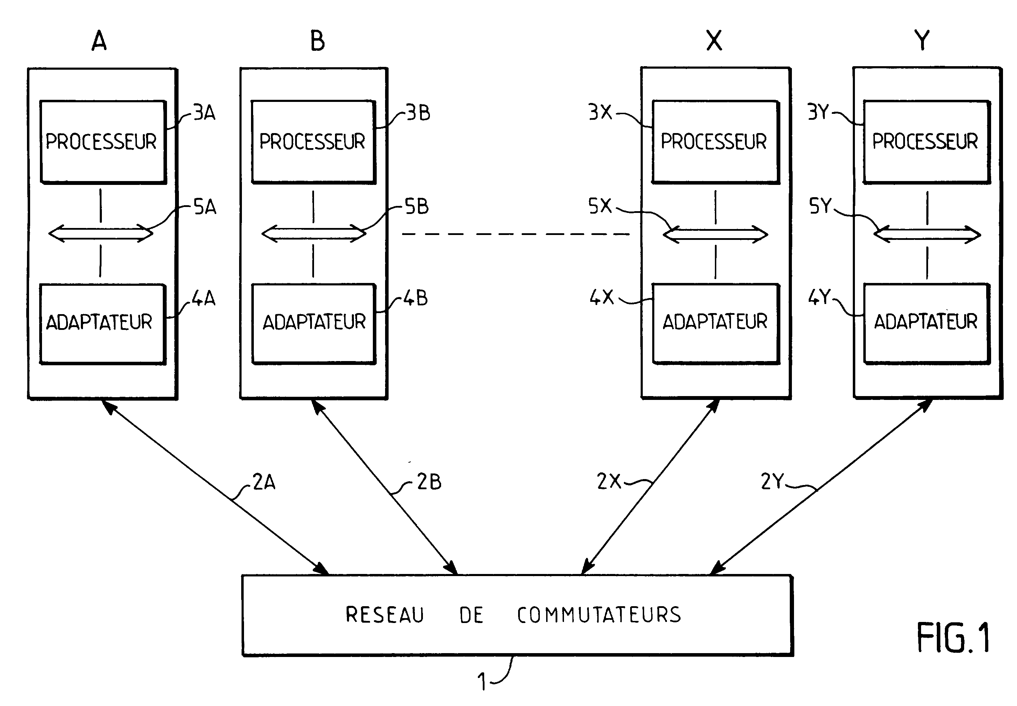

En se référant tout d'abord à la figure 1, on peut voir une pluralité de noeuds A, B,... X, Y d'un calculateur parallèle temps réel, interconnecté au moyen d'un réseau local à commutation comprenant un réseau de commutateurs 1 et des liaisons physiques telles que 2_{A}, 2_{B}... 2_{X} et 2_{Y}.

Chacun des noeuds A, B,... X, Y comprend un processeur principal, respectivement 3_{A}, 3_{B},... 3_{X}, 3_{Y} qui accède au réseau local à commutation au moyen d'un adaptateur d'interface d'interconnexion, respectivement 4_{A}, 4_{B},... 4_{X}, 4_{Y}, par l'intermédiaire d'un bus d'entrées/sorties, respectivement 5_{A}, 5_{B},... 5_{X}, 5_{Y}. Conformément à l'invention, chaque adaptateur 4_{A}, 4_{B},... 4_{X}, 4_{Y} fournit un support pour les communications en temps réel, en plus de l'ensemble des caractéristiques standard propres au réseau local à commutation.

On notera que dans le mode de réalisation particulier de l'invention décrit ici à titre d'exemple, le réseau local à commutation utilisé est de type ATM (Asynchronous Transfer Mode). Dans un tel réseau ATM, la communication entre noeuds s'effectue au moyen de canaux virtuels utilisant les liaisons physiques 2_{A}, 2_{B},... 2_{X}, 2_{Y} et auxquels sont associés des "qualités de service" représentant des garanties des paramètres de débit de données ou de bande passante.

Conformément à l'invention, la qualité de service à débit constant appelée CBR est utilisée pour le transfert de données ayant des caractéristiques temps-réel, et la qualité de service débit disponible appelée ABR est utilisée pour le transfert des données intensives, ce qui permet d'utiliser les mécanismes de priorité des commutateurs 1 pour différencier ces deux types de données et d'assurer que le procédé de traitement des priorités pour les données temps réel est compatible avec le fonctionnement standard desdits commutateurs.

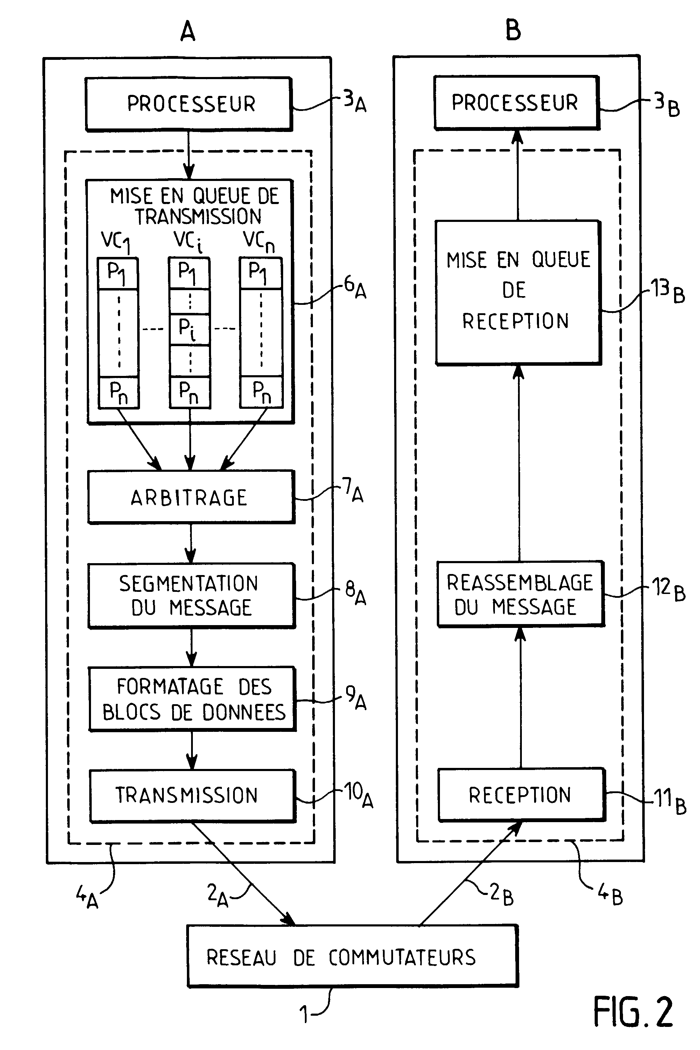

On va maintenant décrire le processus de transfert de données temps réel entre deux noeuds du calculateur parallèle, par exemple entre le noeud A fonctionnant en tant qu'émetteur et le noeud B fonctionnant en tant que récepteur, en se référant plus particulièrement à la figure 2.

Lorsqu'une application en temps réel qui s'exécute sur le processeur 3_{A} du noeud A crée un message pour transmettre des données temps réel à l'application en temps réel qui s'exécute sur le processeur 3_{B} du noeud B, elle transmet dans l'en-tête du message la priorité courante affectée audit message. Ceci est assuré par le système d'exploitation ou par l'application elle-même.

Les différents messages ainsi créés sont ensuite mis en queue dans des moyens de mise en queue de transmission 6_{A}. Conformément à l'invention, on utilise une queue de message pour chaque canal virtuel CBR, respectivement VC₁... VCᵢ... VCₐ, et pour chaque niveau de priorité à l'intérieur de ce canal virtuel, respectivement P₁... Pᵢ... Pₙ.

On notera ici que les canaux virtuels ABR qui ne véhiculent pas de données temps-réel, mais seulement des données intensives, n'ont pas besoin d'être organisés par priorité. Les données intensives sont donc transmises entre les différents noeuds du calculateur parallèle de la même façon que les données temps réel, en fonction de leurs qualités de service propres, sans considération de priorité.

La sélection du message à transmettre s'effectue grâce à des moyens d'arbitrage 7_{A}. Ces moyens d'arbitrage sélectionnent d'abord le canal virtuel en respectant le paramètre de qualité de service, comme spécifié dans le fonctionnement du réseau local à commutation considéré, ici le réseau ATM, puis, conformément à l'invention, sélectionnent dans la queue de transmission de ce canal virtuel le message ayant le niveau de priorité le plus élevé.

Si l'on suppose par exemple que le canal virtuel VCᵢ ait été sélectionné, les moyens d'arbitrage 7_{A} vont alors sélectionner dans ce canal VCᵢ la queue de message non vide ayant la plus grande priorité, par exemple la queue Pᵢ. Le message sélectionné sera alors le message le premier entré dans cette queue Pᵢ.

On notera que chaque message dont la transmission a été interrompue au profit d'un message plus prioritaire a ses références conservées dans la queue de transmission des message du canal virtuel qui lui est alloué, et ce jusqu'à transmission complète du message. Si l'on suppose qu'il y avait un message en cours de transmission pour ce canal virtuel VCᵢ, moins prioritaire que le message de la queue Pᵢ, les références de ce message sont conservées dans la queue de priorité correspondante ainsi qu'une adresse indiquant quelle partie du message reste à transmettre. Ce message sera à nouveau sélectionné par les moyens d'arbitrage 7_{A} lorsque toutes les queues de plus haute priorité que la sienne pour ce canal virtuel VCᵢ seront épuisées.

Le message sélectionné par les moyens d'arbitrage 7_{A} est ensuite segmenté en blocs de données ou cellules par les moyens de segmentation 8_{A}, de façon à assurer le transfert du message cellule par cellule. Selon l'invention, et lorsqu'il s'agit d'un message à transmettre en temps réel, la charge utile de la cellule ou bloc de données est diminuée afin d'y insérer l'information de priorité du message, telle que donnée par l'application et utilisée pour la mise en queue de transmission 6_{A} et l'arbitrage 7_{A}.

La cellule est alors formatée en 9_{A}, conformément à la spécification du réseau local à commutation considéré, ici le réseau ATM, de façon à pouvoir être transmise correctement par le moyen de transmission 10_{A} sur les liaisons physiques telles que 2_{A} et traitée correctement par les commutateurs du réseau d'interconnexion 1, avec la qualité de service correspondante.

Il convient par ailleurs de noter que les cellules ou blocs de données correspondant aux données intensives sont transmises sur l'adaptateur 4_{A} à une vitesse correspondant à la bande passante disponible du canal virtuel ABR considéré, tandis que les cellules correspondant aux données temps réel sont transmises sur ledit adaptateur à une vitesse correspondant à la bande passante réservée du canal virtuel CBR considéré.

Après avoir traversé le réseau de commutateurs 1, la cellule arrive sur l'adaptateur 4_{B},... du noeud récepteur B par le liaison physique 2_{B}. Lorsque les moyens de réception 11B reçoivent une cellule, ils séparent la charge utile et les informations de contrôle, dont l'information de priorité. Ces informations sont ensuite utilisées pour réassembler le message dans les moyens de réassemblage 12_{B}. Selon l'invention, on utilise une queue de message pour chaque canal virtuel CBR et pour chaque niveau de priorité à l'intérieur de ce canal virtuel. Tous les messages peuvent donc être réassemblés simultanément, quel que soit l'ordre d'entrelacement des cellules entre les messages.

Quand le message complet est réassemblé, sa référence est placée dans une queue de réception 13_{B} organisée par priorité, selon la priorité du message. Cette priorité est ensuite prise en compte par l'application temps réel qui s'exécute sur le processeur 3_{B} du noeud récepteur B. On notera qu'à un instant déterminé, les moyens de mise en queue de réception 13_{B} peuvent contenir plusieurs messages provenant de noeuds différents et avec des priorités différentes.

Bien entendu, tous les adaptateurs 4_{A}, 4_{B}... 4_{X}, 4_{Y} des différents noeuds sont de réalisation identique et contiennent à la fois les moyens nécessaires à l'émission et à la réception des messages.

On voit donc en définitive que le procédé conforme à l'invention d'interconnexion des noeuds d'un calculateur parallèle permet de transmettre à chaque instant la cellule du message le plus prioritaire, en respectant la qualité de service et la priorité de chaque message, données par les applications qui s'exécutent sur les différents processeurs. Ce procédé permet donc d'obtenir une latence déterministe et faible de la transmission des messages temps réel entre les différents noeuds du calculateur.

On notera par ailleurs qu'un tel procédé d'interconnexion permet, du fait de l'utilisation d'un réseau local de mettre certains noeuds du calculateur parallèle à des emplacement distants, en particulier les noeuds d'acquisition de données, ce qui procure une grande souplesse d'utilisation au système.

## Revendications

1. Procédé d'interconnexion des noeuds d'un calculateur parallèle temps réel dans lequel on utilise, comme système d'interconnexion, un réseau local de commutation à canaux virtuels, chaque canal virtuel étant associé à une bande passante déterminée, de façon à assurer le contrôle de bout en bout de la latence de transmission d'un message à transmettre en temps réel, dans une chaîne comprenant, un noeud émetteur (A) avec un processeur principal (3_{A}) et un adaptateur d'interface d'interconnexion (4_{A}), un noeud récepteur (B) avec un processeur principal (3_{B}) et un adaptateur d'interface d'interconnexion (4_{B}), et au moins un commutateur (1) reliant lesdits adaptateurs d'interface (3_{B}, 4_{B}), ledit procédé d'interconnexion étant caractérisé en ce qu'il comprend les étapes consistant :
- à affecter, lors de l'initialisation d'une application en temps réel sur le processeur principal du noeud émetteur, des canaux virtuels à bande passante disponible aux données intensives à transmettre et des canaux virtuels à bande passante réservée aux données à transmettre en temps réel ;
- à affecter un niveau de priorité à chaque message à transmettre en temps réel ;
- à segmenter les données intensives et les données temps réel en blocs de données, en ajoutant à chaque bloc de données temps réel l'information de priorité du message correspondant ;
- à transmettre sur l'adaptateur de l'interface d'interconnexion du noeud émetteur les blocs de données correspondant aux données intensives à une vitesse correspondant à la bande passante disponible du canal virtuel considéré et les blocs de données correspondant aux données à transmettre en temps réel à une vitesse correspondant à la bande passante réservée du canal virtuel considéré, tout en respectant le niveau de priorité affecté à chaque bloc de données ;
- à réassembler les blocs de données dans l'adaptateur de l'interface d'interconnexion du noeud récepteur afin de reconstituer les messages ; et
- à transmettre ces derniers au processeur principal du noeud récepteur en respectant le niveau de priorité desdits messages.

2. Procédé d'interconnexion selon la revendication 1, caractérisé en ce que certains noeuds du calculateur parallèle sont situés à des emplacements distants.

3. Procédé d'interconnexion selon la revendication 2, caractérisé en ce que les noeuds distants sont des noeuds d'acquisition de données.

4. Adaptateur d'interface d'interconnexion pour la mise en oeuvre du procédé d'interconnexion selon la revendication 1, caractérisé en ce qu'il comprend :
du côté émission (4_{A})
- des moyens (6_{A}) pour ranger les messages temps réel, créés par le processeur principal (3_{A}) du noeud émetteur (A) et préalablement affectés d'un niveau de priorité, dans des queues de transmission de message en tenant compte de chaque canal virtuel utilisé et du niveau de priorité à l'intérieur de ce canal,
- des moyens d'arbitrage (7_{A}) pour sélectionner le message suivant à transmettre et le canal virtuel correspondant, en fonction du niveau de priorité de chaque message,
- des moyens (8_{A}) pour segmenter le message à transmettre en blocs de données comportant l'information de priorité du message correspondant,
- des moyens (9_{A}) de formatage des blocs de données, et
- des moyens (10_{A}) de transmission desdits blocs de données sur le réseau local de commutation comportant au moins un commutateur,
et du côté réception (4_{B})
- des moyens de réception (11_{B}) des blocs de données ayant transité par ledit commutateur de réseau local (1),
- des moyens (12_{B}) pour réassembler le message à partir des blocs de données reçus, et
- des moyens (13_{B}) pour ranger les messages reconstitués dans des queues de réception en tenant compte de chaque canal virtuel utilisé et du niveau de priorité du message à l'intérieur de ce canal avant de les transmettre au processeur principal (3_{B}) du noeud récepteur (B).
